# EUROPEAN PATENT SPECIFICATION

(11) **EP 2 391 982 B1**
(45) Date of publication and mention of the grant of the patent: **27.05.2020**
(21) Application number: 09839393.7
(22) Date of filing: 28.01.2009
(51) Int. Cl.: G06T 3/00, G06T 11/00

(54) **DYNAMIC IMAGE COLLAGE**
DYNAMISCHE BILDCOLLAGE
COLLAGE DYNAMIQUE D'IMAGES

(43) Date of publication of application: 07.12.2011
(73) Proprietor: Hewlett-Packard Development Company, L.P., Spring TX 77389 (US)
(72) Inventor: SLATTER, David, Bristol, Bristol BS34 8QZ (GB); CHEATLE, Phil, Bristol, Bristol BS34 8QZ (GB); GREIG, Darryl, Bristol, Bristol BS34 8QZ (GB)
(74) Representative: Haseltine Lake Kempner LLP
(86) International application number: PCT/US2009/032221
(87) International publication number: WO 2010/087818

(56) References cited:
- JP-A- 2008 217 479
- US-A1- 2005 137 946
- US-A1- 2005 273 470
- US-A1- 2008 222 560
- US-A1- 2008 304 718
- '(National Taiwan Univ.), The 14th ACM international conference on multimedia, 23 October 2006', 23 October 2006 deel 'Tiling slideshow', pages 25 - 34, XP007913307

## Description

### BACKGROUND OF THE INVENTION

Most people have large collections of poorly indexed personal media, much of which has high emotional appeal but relatively low visual quality. Skilled practitioners can produce visually appealing artifacts (e.g., composite images and slideshows) from such collections but few users have the time or creative ability to do so themselves. Conventional approaches to screen-based photo display tend to fall into two categories: manually created slideshows, showing a single image at a time with some sort of transition between them; and automatically generated videos of image sequences, possibly overlaid with some visual effects and set to music. Random photo selection screensavers fall somewhere between these categories.

What are needed are improved systems and methods for displaying images.

US patent application US 2008/304718 A1 describes a device and method for automatically creating a photo album.

### BRIEF SUMMARY OF THE INVENTION

In one aspect, the invention features a method in accordance with which a sequence of templates is determined. Each of the templates defines a respective spatiotemporal layout of regions in a display area. Each of the regions is associated with a respective set of one or more image selection criteria and a respective set of one or more temporal behavior attribute values. For each of the templates, a respective image layer for each of the regions of the template is ascertained. In this process, for each of the layers, a respective image element is assigned to the respective region in accordance with the respective set of image selection criteria. For each frame in a sequence of frames, a respective set of rendering parameter values is produced. Each set of parameter values specifies a composition of the respective frame in the display area based on a respective set of ones of the image layers determined for one or more of the templates and the respective sets of temporal behavior attribute values. The sets of rendering parameter values are output to a composite image renderer.

The invention also features apparatus operable to implement the inventive method described above and computer-readable media storing computer-readable instructions causing a computer to implement the inventive method described above.

Other features and advantages of the invention will become apparent from the following description, including the drawings and the claims.

### BRIEF DESCRIPTION OF THE DRAWINGS

FIG. 1 is a block diagram of an embodiment of a dynamic image collage generator.
FIG. 2 is a flow diagram of an embodiment of a method of generating a dynamic image collage.
FIG. 3 is a diagrammatic view of information flow in a process of generating a dynamic image collage.
FIGS. 4A and 4B are diagrammatic views of respective frames generated in a process of generating a dynamic image collage.
FIG. 5 is a bock diagram of an embodiment of the dynamic image collage generator of FIG. 1.
FIG. 6 is a diagrammatic view of a sequence of interleaved templates and transitions.
FIG. 7 is a flow diagram of an embodiment of a method of extracting one or more image elements from a source image.
FIG. 8 is a diagrammatic view of an embodiment of an avoidance map.
FIG. 9 is a flow diagram of an embodiment of a method of producing ornamental layers of a dynamic image collage.
FIG. 10 is a flow diagram of an embodiment of a method of scheduling layers in a process of rendering frames of a dynamic image collage.
FIG. 11 is a block diagram of an embodiment of a computer system that implements an embodiment of the dynamic collage generator of FIG. 1.

### DETAILED DESCRIPTION OF THE INVENTION

In the following description, like reference numbers are used to identify like elements. Furthermore, the drawings are intended to illustrate major features of exemplary embodiments in a diagrammatic manner. The drawings are not intended to depict every feature of actual embodiments nor relative dimensions of the depicted elements, and are not drawn to scale.

### I. DEFINITION OF TERMS

A "template" is a content-free specification of a spatial layout of content regions each of which may be associated with respective temporal behavior and other attributes.

As used herein, an "image element" is a reference to a portion of an image and may be associated with one or more attribute values,

A "frame" is a complete image that is composited from one or more layers.

A "layer" is an object that defines different elements of a composite image. A layer can have a certain transparency/opacity and a number of other properties, including spatiotemporal properties.

A "matte" is linked to a layer and defines a mask that indicates the contribution (e.g., level of transparency) of pixels of the layer to a final composite image,

The term "z-order" means the order in which layers are combined to form a composite image.

A "non-photorealistic" variant of an image refers to a version of the image that purposefully and stylistically modifies the image.

As used herein, the term "includes" means includes but not limited to, the term "including" means including but not limited to. The term "based on" means based at least in part on.

### II. INTRODUCTION

Most people have large collections of poorly indexed personal media (particularly digital photographs and digital video clips), much of which has high emotional appeal but relatively low visual quality. The increasing availability of large electronic display spaces in the home supports the delivery of ambient experiences based on these media collections. The embodiments that are described herein are operable to automatically generate a dynamic collage of images (e.g., image elements, such as digital photographs and salient elements extracted therefrom). The collage can be configured to change continuously over time so as to produce a visually appealing ambient experience that is likely to sustain a viewer's interest over long time periods. These embodiments typically have imperfect knowledge of what the user is likely to find interesting. However, by extracting multiple objects of interest from user photos and displaying them together, these embodiments typically are able to provide the user with a rich choice of visual targets such that the user is more likely to see at least one thing of interest in the dynamic collage. In some cases, a dynamic collage specification can leverage the large number of possible variations in the presentation of visual content to reduce the likelihood that the same composition will be presented more than once, thereby ensuring that the presentation of an image collection always has a refreshing appeal.

Some embodiments include an adaptive background generator that generates multiple background elements that can be visually integrated with the presentation of the image elements so that the overall impact of the display is pleasing. Backgrounds typically are automatically designed to suit the collage arrangement, avoiding the overlap of high interest areas in background and foreground.

In some embodiments, designer templates can be used to specify image selection criteria and temporal behavior attributes for producing a themed collage offering high quality images for print. After sufficient time has been allowed for the user to take in a collage composition produced in accordance with one template, user interest is sustained through a content-driven transition taking the viewer into another composition that is produced in accordance with the same or a different template. These embodiments are able to automatically continue and develop a specified theme (e.g., faces from photos of the same person) from one collage to the next.

### III. OVERVIEW

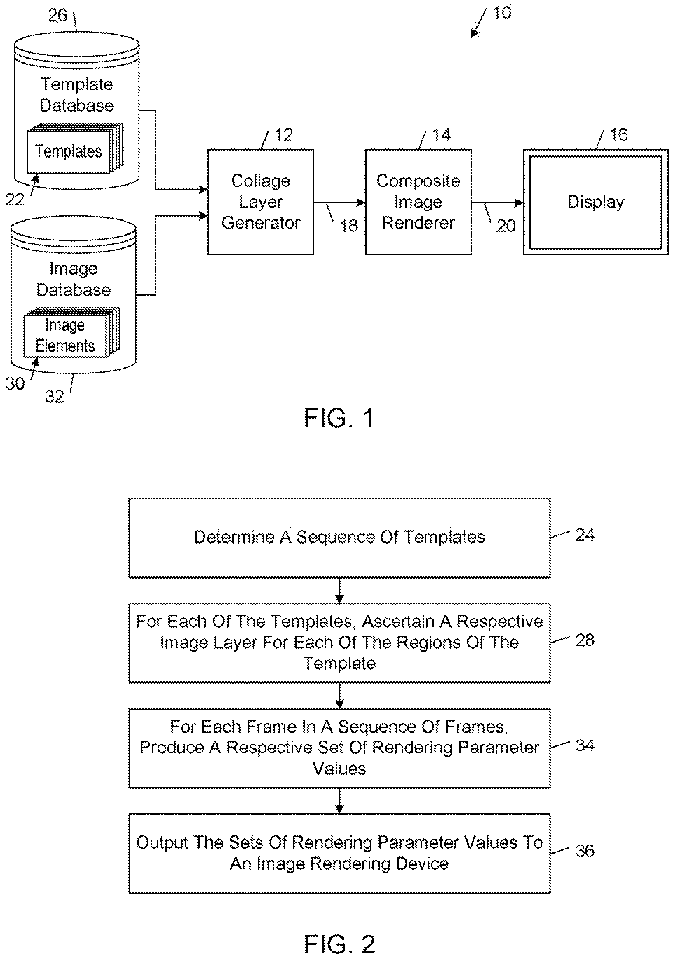

FIG. 1 shows an embodiment of a dynamic collage generation system 10 that includes a collage layer generator 12, a composite image renderer 14, and a display 16. In operation, the collage layer generator 12 determines layers 18 of a dynamic collage composition and schedules the layers 18 for rendering by the composite image renderer 14. The composite image renderer 14 produces a sequence of frames 20 from the layers 18 that are generated by the collage layer generator 12 and passes the frames to the display 16. The display 16 displays the frames for viewing.

FIG. 2 shows an embodiment of a method that is implemented by the collage layer generator 12.

In accordance with the method of FIG. 2, the collage layer generator 12 determines a sequence of templates 22 (FIG. 2, block 24). The collage layer generator 12 typically selects the templates 22 from a template database 26. The templates 22 in the sequence may be selected randomly or in accordance with a predetermined template selection plan. Each of the templates 22 defines a respective spatiotemporal layout of regions in a display area, where each of the regions is associated with a respective set of one or more image selection criteria and a respective set of one or more temporal behavior attribute values. The templates 22, which include image element templates and ornamental templates, typically are constructed offline by one or more "experience designers." Each template 22 typically contains a designers choices of the number, sizes, and positions of image elements or ornamental elements that produce a desired aesthetic effect. Ornamental layers typically are created according to a style, to suit the avoidance mask formed from a set of image elements arranged according to a template In some embodiments, a template specification includes regions of a display area that the designer has labeled (e.g., with grey and white colors on a black background) to indicate preferred and required placements. The use of templates as a basis for generating the dynamic image collage enables the look and feel of the displayed output to be refreshed with new content generated by design professionals in such a way that it appears custom made for a particular image collection.

For each of the templates 22, the collage layer generator 12 ascertains a respective image layer for each of the regions of the template (FIG. 2, block 28). This process typically involves, for each of the layers, assigning a respective image element 30 to the respective region in accordance with the respective set of image selection criteria. In some embodiments, each image element 30 typically consists of image portions (e.g., faces and other salient regions) that are extracted from various source images (e.g., digital photographs or digital video clips) that are indexed in the image database 32. The image elements 30 may be predetermined and stored in the image database 32 or they may be generated in realtime based on metadata that is stored in association with the source images.

For each frame in a sequence of frames, the collage layer generator 12 produces a respective set of rendering parameter values (FIG. 2, block 34). Each set of rendering parameter values specifies a composition of the respective frame in the display area based on a respective set of ones of the image layers determined for one or more of the templates and the respective sets of temporal behavior attribute values.

The collage layer generator 12 outputs the sets of rendering parameter values to the composite image renderer 14 (FIG. 2, block 36). The rendering parameter values that are produced by the collage layer generator 12 fully specify the compositions and temporal behaviors of the layers 18 that are used by the composite image renderer 14 to produce the sequence of frames 20 that are rendered on the display 16.

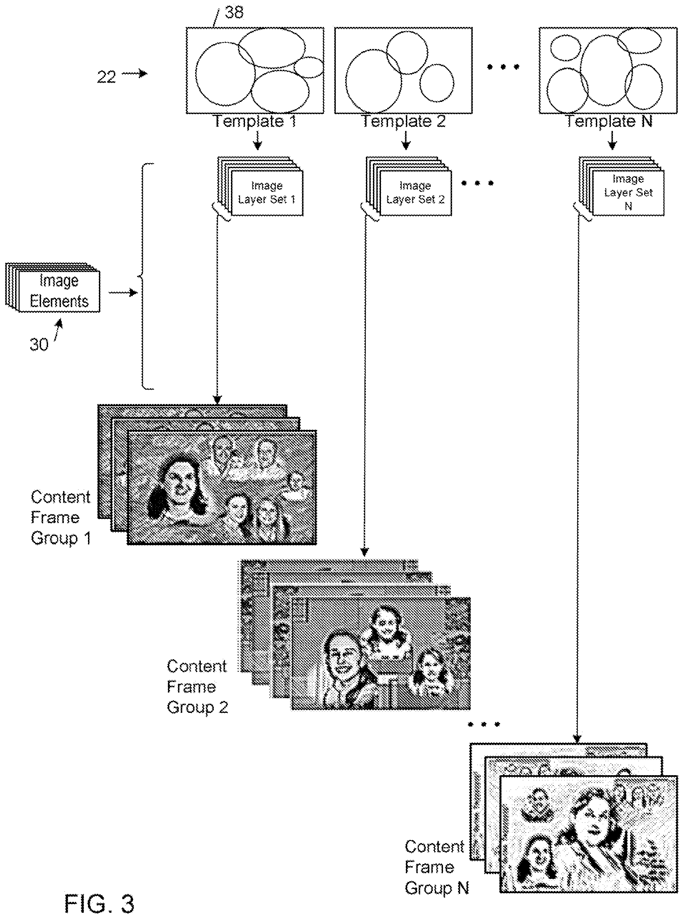

FIG. 3 diagrammatically shows relationships between various data elements that are involved in embodiments of a process of generating a dynamic image collage in accordance with the method of FIG. 2. In this process, the collage layer generator 12 selects a sequence of the templates 22 (Template 1, Template 2, ..., Template N). Each of the templates 22 specifies a respective spatiotemporal layout of regions (represented by ellipses in FIG. 3) in a display area 38. For each of the templates, the collage layer generator 12 assigns ones of the image elements 30 to the regions, and generates a respective set of layers (Image Layer Set 1, Image Layer Set 2, ..., Image Layer Set N) from the image elements in accordance with the templates and other information. Each layer defines the spatiotemporal behavior of a respective one of the image elements 30 that is assigned to a respective one of the regions. The rendering parameter values that are produced by the collage layer generator 12 fully specify the image layer sets. The composite image renderer 14 generates a sequence of frames from each of the image layer sets.

As shown in FIG. 3, in some embodiments, the rendering parameter values produced by the collage layer generator 12 specify a sequence of groups of content frames (Content Frame Group 1, Content Frame Group 2, ..., Content Frame Group N) in accordance with the sequence of templates 22. As discussed in detail below, the content frame groups typically are separated by groups of transition frames (not shown in FIG. 3). The groups of content frames typically are designed to create a sequence of "islands of stability." The islands typically are not completely static; instead, minor motion of visual elements of the respective content groups typically is specified to sustain the viewers interest. Each island is a collage of a set of the image elements 30 that typically are displayed in a dynamically generated adaptive background (discussed below). The image elements 30 typically are selected for each template 22 according to a theme which gives semantic coherence to each collage. Examples of themes include images of the same person and images of a person with their friends.

As explained in detail below, each of one or more of the image elements 30 may be associated with a respective set of mattes that demarcate the image element in a respective source image, and a respective set of one or more non-photorealistic variants of the source image. The mattes typically are non-rectangular; although in some embodiments, the mattes are rectangular. The image and matte elements are passed to the composite image renderer 14 as a sequence of layers which overlay each other according to a defined z-order. Each layer has timing specifications determining how the elements move, scale, blend, and how the alpha matte is applied. By programming the timing of adjustments to these parameters the collage layer generator 12 can generate interesting transitions from one island to another, and create continuous cyclic motion within each island of stability.

In addition to image-based layers, some embodiments of the collage layer generator 12 create artistically inspired backgrounds that are designed to accommodate the dynamic locations of the image elements. Backgrounds typically are composed of multiple layers, each with its own z-position, motion, matte, and timing data values. This permits effects such as background details which move continuously, allowing overlaying and blending with the image layers.

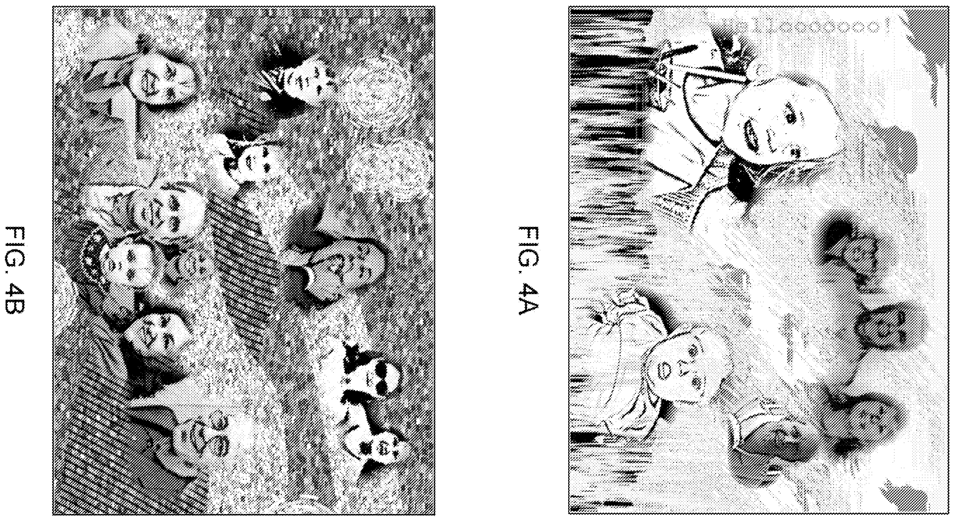

FIGS. 4A and 4B show two screenshots taken of different islands of stability in an exemplary dynamic image collage. The selection and matting of the image elements, the artistic face rendering, and all the background component generation shown in these screenshots were all performed automatically in accordance with the method of FIG. 2.

### IV. EXEMPLARY EMBODIMENT OF THE DYNAMIC IMAGE COLLAGE GENERATOR

### A. INTRODUCTION

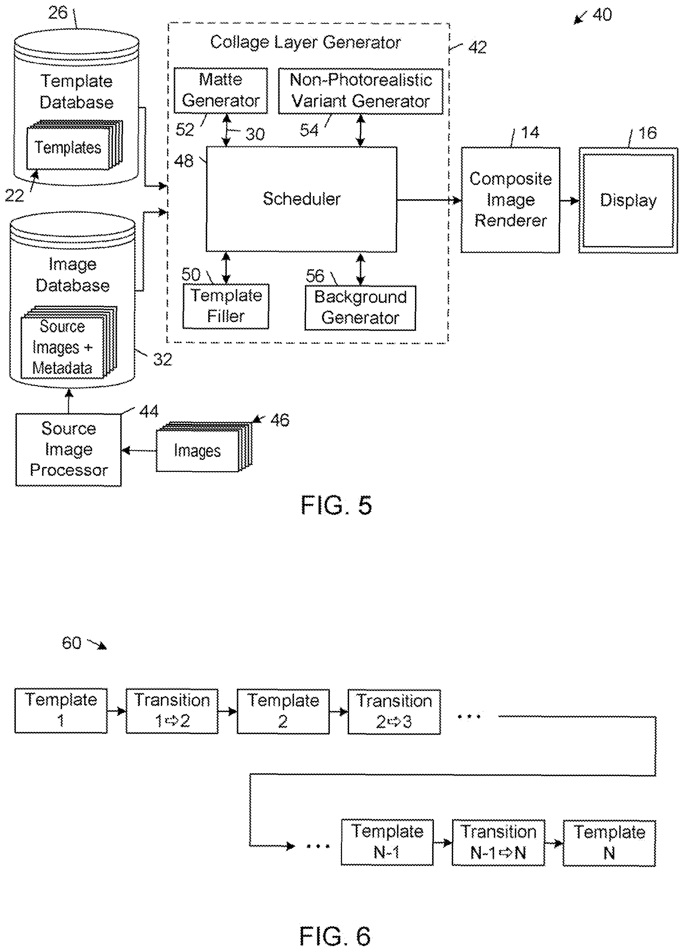

FIG. 5 shows an embodiment 40 of the dynamic collage generation system 10 that includes an embodiment 42 of the collage layer generator 12, the composite image renderer 14, the display 16, and a source image processor 44.

The source image processor 44 generates the image database 32 from source images 46, which typically includes the user's source material. The source images 46 may correspond to any type of digital image, including an original image (e.g., a video frame, a still image, or a scanned image) that was captured by an image sensor (e.g., a digital video camera, a digital still image camera, or an optical scanner) or a processed (e.g., sub-sampled, filtered, reformatted, scene-balanced or otherwise enhanced or modified) version of such an original image. In the process of building the image database 32, the image element extractor 44 extracts metadata from the source images 46. Among the exemplary types of metadata that are extracted by the source image processor 44 are face locations, face identity, facial feature points, temporal data (e.g., acquisitions times), non-facial saliency data, segmentation data, color analysis data, and facial expression information. In some embodiments, the source image processor 44 may extract metadata from sub-sampled versions of the source images 46.

The collage layer generator 42 includes a scheduler 48, a template filler 50, a matte generator 52, a non-photorealistic variant generator 54, and a background generator 56. The scheduler 48 creates a sequence of islands of stability. As explained above, each island is a collage of a set of image elements 30 that are arranged according to a respective one of the designer templates 22. The image elements are selected by the template filler 50 according to a theme that gives semantic coherence to each collage. Examples of themes include photos of the same person and photos of a person with their friends. The matte generator 52 generates a respective set of non-rectangular mattes that reference a respective one of the source images 46 and defines a respective one of the image elements 30. The non-photorealistic variant generator 54 generates a respective non-photorealistic variant of an original source image and associates the non-photorealistic variant with the corresponding image elements. The mattes and the non-photorealistic variant typically are passed to the composite image renderer 14 as a sequence of layers that overlay each other according to a defined z-order. Each layer has timing specifications determining how the elements move, scale, blend, and how the alpha matte is applied. By programming the timing of adjustments to these parameters the scheduler generates interesting transitions from one island to another, and creates continuous cyclic motion within each island of stability. These transitions may make use of the meta-data in the image database 32; for example, zooming into a particular face from an image element in the current collage, aligning the eyes to a those of a face from a different image element in the new collage, blending from one face to the other, and then moving the new face into position in the new collage.

The background generator 56 creates artistically inspired backgrounds that are designed to accommodate the dynamic locations of the image elements. Backgrounds typically are composed of multiple layers, each with its own z-position, motion, matte, and timing data values. This permits effects such as background details which move continuously, allowing overlaying and blending with the image layers. In some embodiments, the background generator 12 uses an avoidance map for the current island of stability to ensure that important areas of the image elements (e.g., faces) are not obscured during the presentation of the dynamic image collage.

The composite image renderer 14 takes the layer specification provided by the scheduler 48 and produces the frames that are rendered on the display 16 in real time. In some embodiments, the composite image renderer 14 is implemented by a commercially available rendering system (e.g., a video or graphics card that is interfaced via an API, such as the DirectX® API available in Microsoft Windows® operating systems) that support layer combination processes and allow the properties of each layer to be specified as a function of time. These properties include size, rotation, displacement, z order, and transparency. In these embodiments, the graphics capability of the rendering system can achieve realtime motion, scaling, blending and matting of multiple image layers at high rendering rates (e.g., thirty frames per second or greater).

In some embodiments, the composite image renderer 14 is responsive to two forms of user interaction. The first form of interaction involves the use of a user interface that provides a small set of user commands that enable the dynamic image collage that is being displayed on the display 16 to be frozen at any point in time. The user interface allows the viewer to step backwards and forwards through the sequence of frames to locate a specific frame, in order to save or print it, (potentially re-rendered at higher resolution). The second form of interaction involves the use of a camera and a realtime face detector that feeds back the size of the largest face in the audience. The Renderer can react to this by, for example: a) slowing down the rendering rate as a face approaches the screen, allowing viewers to pay more attention to the frame that caught their attention; b) increasing the size of a previously designated "primary" photo on the display; and c) causing the primary photo to blend from the manipulated version to the original. Additional details about the construction and operation of these embodiments can be found in U.S. Application No. __, filed on even date herewith, and entitled "SYSTEM AND METHOD FOR DYNAMIC GENERATION OF MULTIMEDIA CONTENT" [Attorney Docket No. 200802868-1].

### B. SPATIOTEMPORAL TEMPLATES

The spatiotemporal templates 22 encapsulate automated design knowledge that controls many aspects of the dynamic image collage generation process, including collage layout, image element selection, choice of non-photorealistic variant generation, and background design.

A template may be specified in any number of ways. The Appendix attached hereto contains an exemplary XML (extended Markup Language) template specification. The exemplary template specification defines a set of regions, each of which contains one or more image elements. Each region definition includes constraints on the number of faces allowed, the range of face sizes allowed, and potentially the allowable poses of those faces (ipr="in plane rotation"). For example, the idmatch element indicates that for the specified region, there are constraints on the identities allowed in the other regions. A "match" child indicates that the match subregion must contain an individual represented in the idmatch region. A "nomatch" child indicates that no individual in the match child region can match any individual in the idmatch region. The "left" parameter specifies the leftmost boundary of the widthxheight bounding box for the region. The "top" parameter specifies the topmost boundary of the widthxheight bounding box for the region. The "width" specifies the maximum allowable width for a scaled image element suitable for the region. The "height" specifies the maximum allowable height for a scaled image element suitable for the region. The "count" parameter specifies the number of faces allowed in the region. The "radius" parameter specifies the range of allowable face radii allowed in this region. The "ipr" parameter specifies the range of allowable pose angles. Some embodiments additionally include a "hoop" (="horizontal out of plane" rotation) parameter that specifies the range of profile to portrait poses allowable in the region.

The "configs" element at the end of the exemplary template specification contained in the Appendix includes one or more config elements that are made up of a subset of the regions that are defined in the template. The config elements specify the regions that are activated in that particular configuration, and enforce cross-region requirements.

Referring to FIG. 6, the overall dynamic image collage experience is defined by selection of a sequence 60 of the spatiotemporal templates 22 (Template 1, Template 2, ..., Template N-1, Template N) and transition plans (Transition 1 ⇒ 2, Transition 2⇒3, ..., Transition N-1⇒N) that link the templates in the sequence 60. The sequence of templates can be specified by an experience designer based on the type of experience the designer wishes to create (e.g., a story to be told). Alternatively, the selection of templates may be driven at least in part by an automatic analysis of the source images 46.

As explained above, the dynamic collage experience consists of a sequence of groups of frames. In a typical implementation, content frame groups are separated by transition frame groups, where each frame in a content frame group is rendered by combining image layers belonging to that content group, and each frame in a transition frame group is rendered by combining layers from the adjacent content frame groups. Content frame groups can include image element layers and ornamental layers.

Image element layers in a content frame group are defined by a respective one of the templates 22 that specifies the spatiotemporal layout of regions; each of the regions is associated with image element selection criteria and a respective set of one or more temporal behavior attribute values; and the image elements are assigned to the regions in accordance with the respective sets of image element selection criteria. Each region typically is allocated to its own layer to allow independent motion and combination. Where the image element is a portion of a larger source image, the whole source image typically is loaded into the layer and a mask is associated with the layer to reveal only the required image element. This allows the rendering engine to make transitions between showing only an image element and showing its entire source image by changing a parameter which determines how opaquely the mask is applied.

Ornamental layers have graphics/image objects assigned to them according to a style template and the image elements that have been assigned to the foreground layers. The color of ornamental objects can be chosen to complement the image element layers and the decorative objects can be positioned to avoid visual clashes with image elements, typically based on avoidance maps.

Transition frame groups are rendered from the layers of adjacent content frame groups according to a transition plan. In some embodiments, the layers of both content frame groups will be active and the plan specifies motion and transparency attributes of the old layers as they fade away and of the new layers as they fade in.

In some embodiments, the sequence 60 of templates and transitions is generated at random. The transition is selected first, as this determines whether the next island uses the same template or a different template, (and whether it uses the same or different image elements). Transitions may be selected randomly from a set of possible transitions in a weighted random manner. In one exemplary embodiment, the three possible transitions are:
1. "Ornamental layers change": Same template and image elements, with different ornamental layers. The old ornamental layers blend into the new ones - the image elements are unchanged.
2. "Photo fill": Different template, image elements, and ornamental layers. The source image containing the preferred image elements (the one with the largest face) is revealed in its entirety (e.g., by gradually making its mask transparent), and moves to fill most of the display screen. It then blends into the unmasked source image containing the preferred image element for the new island. The old ornamental layers blend into the new ones (mostly obscured by the full image element at this stage). The mask for the new preferred image element is gradually applied to hide the rest of its source image. The new image elements move into position (each using one of a set of possible entry motions selected at random)
3. "Face fill": This is similar to "Photo fill" except that the full source images are not revealed. Instead, the preferred image element face is moved and scaled to mostly fill the screen. The new preferred image element face is aligned with the old face (i.e., by making the eye positions coincide), the old face is blended into the new. In some implementations, the old face is morphed into the new instead of simply blending. In these implementations, morphing typically includes blending, combined with gradual spatial distortion of images so that many key points (e.g., eyes, mouth, and jaw line) are aligned.
In some embodiments, whenever a different template must be selected, the next template can be any one of the set of possible templates excluding the current template.

In some embodiments, a process or script controls the template selection process. In one such embodiment, a process analyzes the source image collection to determine a series of "stories" consisting of sequences of image element sets. Each set of image elements is assigned to a respective one of the templates 22 based on the contents of the images. In some cases, the template is created to suit the selected image elements.

### C. MATTE GENERATOR

As explained above, an image element typically is a portion (or fragment) of a source image that captures some salient (or interesting) feature of the source image. Examples of salient features include groupings of individuals (preferably cropped out in a visually appealing way), salient foreground objects, or even background scenes. In the illustrated embodiments, the image elements are defined with general crop boundaries, which may be non-rectangular and not even piece-wise linear. In this way, the image elements are interesting to look at and encapsulate the subject in the most visually appealing way. Indeed, the use of image elements with their natural border (e.g. the natural shapes of faces) adds interest beyond the usual rectangular combination of intact source images.

In some embodiments, image elements are generated automatically by the source image processor 44 (FIG. 5) based on metadata that is extracted automatically from the source images 46. The metadata can include such information as location, pose, size, gender, expression, ethnicity, identity of the persons whose faces appear in an image, information about the location and size of non-face salient objects, color information, and texture information.

In the illustrated embodiments, image elements are extracted based on the location and size of faces in the source images 46. In this process, the boundary of an image element is determined from a set of face locations and rules that determine how the face locations are combined (or clustered). In some embodiments, these rules require that:
1. if any two faces are closer than a particular threshold, then either both faces must be included in an image element, or neither face can be included;
2. if any face is greater than a particular threshold away from any other face in a given image element, then it cannot be included in that image element; and
3. if any face is too close to the border of the image, then it cannot be included in an image element at all.
The first condition prohibits half-faces from appearing in image elements, or unnaturally tight crops around faces. The second condition prohibits face-based image elements with one face separated from a group. The third condition prohibits image elements with unnatural face crops due to the image border. In other embodiments, different or other conditions could be imposed depending on the requirements of the application.

In these embodiments, the process of allocating faces to image elements involves clustering face locations based on a "distance" between a face and an image element. Exemplary distance metrics include one or more of: the distance between the face and the nearest face in the image element; the distance between the face and the furthest face in the image element; and the distance from the face to the nearest image border. In some of these embodiments, the clustering process is performed in a greedy fashion by comparing all the distance pairs. Note that different image elements can overlap, and they may include the same faces.

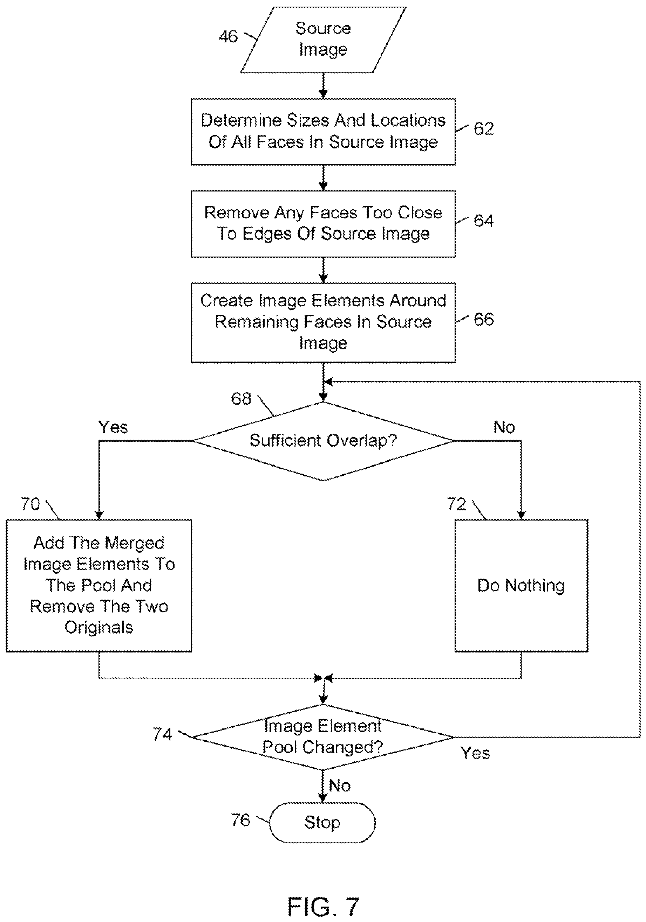

FIG. 7 shows an exemplary embodiment of a method of extracting image elements from a source image 46.

In accordance with the embodiment of FIG. 7, the matte generator 52 determines the sizes and locations of all faces in the source image (FIG. 7, block 62).

The matte generator 52 removes any faces that are too close to edges of the source image (FIG. 7, block 64).

The matte generator 52 creates image elements around the remaining faces in the source image (FIG. 7, block 66). In this process, the matte generator 52 sets the pool of image elements to "empty" and add each face to the pool one at a time. The matte generator 52 then attempts to add a face to each image element in the pool. The matte generator 52 adds a face to an image element by computing a minimal bounding box around the detected face based on the face parameters and optionally some user set parameters (e.g., the amount of shoulder height and width required). If the minimal bounding box falls outside the image boundary the add fails (face too close to boundary) and a "failure" flag is returned. Otherwise the overlap between the minimal bounding box and the existing image element bounding box (minimal box surrounding all minimal face bounding boxes) is computed. If the degree of overlap is above a threshold (e.g., 10%) then the face is added to the current image element and the image element bounding box adjusted. A "success" flag is returned and no further processing on this face takes place. If the degree of overlap is below the threshold a "failure" flag is returned and the current face is passed on to the next image element to attempt an add. If the face is not successfully added to any image elements, a new image element is created that contains only that face (note that this process can fail if the face is too close to the image boundary, in which case no image element is created).

The matte generator 52, then attempts to merge each image element with every other image element in the pool. In this process, each image element is compared with every other image element to see if the image element bounding boxes overlap more than 10% (FIG. 7, block 68). If sufficient overlap is found (FIG. 7, block 68), the two image elements are merged into a single image element and the two originals are removed (FIG. 7, block 70); otherwise, the two image elements are not merged (FIG. 7, block 72). If the image element pool has changed (FIG. 7, block 74), the merging process is repeated; otherwise, the process is terminated (FIG. 7, block 76).

Once a set of locations has been collected, the image element boundary is created. This may require more metadata from the image, and about the specific locations involved. For example, a good image element boundary should be within a specified distance tolerance away from each of the faces in the image (not too close or too far), it should mimic the natural curves of the image element subject (the faces) subject to some smoothness constraints, and it should try to pass through uninteresting parts of the image such as dark areas or flat background. These constraints can be met by using the face data (including things like face orientation so shoulders can be admitted if required) together with a texture map (and possibly some color information) to determine the "flat" areas of the image.

In some cases the constraints supplied may change the locations allocated to the image element. For example, if a very tight crop around faces is required, then it may be that only faces very close together will be admitted to an image element.

After the image element boundaries have been determined, the matte generator 52 associates a respective avoidance mask piece with each image element. Each avoidance mask piece shows the parts of the image element that will be visible, and how important it is for background elements to avoid them. In some embodiments, the avoidance importance is indicated by labeling areas of the image element with one of three gray values: "white", which means that the labeled area can never be obscured by ornamental elements; "gray", which means that the labeled area may be obscured by some ornamental elements; and "black", which means that the labeled area can be obscured by any ornamental elements.

### D. NON-PHOTOREALISTIC VARIANT GENERATOR

The non-photorealistic variant generator 54 may generate a non-photorealistic variant of source image using any of a variety of different non-photorealistic rendering techniques, including image processing techniques (e.g., stippling, watercoloring, stylizing, and mosaicizing) that transform an image into a style that suggests, for example, a painting or other artistic styles.

### E. BACKGROUND GENERATOR

The background generator 56 is responsible for creating the non image element (or ornamental) layers of an island of stability. The background generator 56 typically generates the ornamental layers so that they do not obscure salient parts of the Image elements.

In some embodiments, the background generator 56 avoids obscuring image elements with ornamental features by ensuring that image element layers are above the ornamental layers in the z-order.

In other embodiments, the background generator 56 interleaves the image element layers and the ornamental layers to form a more pleasing, integrated composition. In these embodiments, some background elements can be positioned above the image elements in the z-order, but they are positioned in such a way as to not obscure the most significant parts of the image elements. For example, a thin colored line in the background could be allowed to obscure part of the shoulders of a person in an image element, but should not cover the person's face. This is particularly important with small detail background objects, which would be obscured by the image elements if they are placed below them in the z-order. Equally we need to prevent them obscuring the important parts of the image elements if they are placed above the image elements in the z-order.

In some embodiments, the background generator 56 uses an "avoidance map" in the creation of the ornamental layers. The avoidance map typically is generated by combining the avoidance map pieces from all the image elements that are selected by the template filler 50. In this process, each avoidance map piece is rotated, scaled, and translated to reflect how its associated image element will be used in the composite. The avoidance map typically is implemented by a grayscale image, the same size as the final composite image, where non-black areas indicate locations which the image elements will occupy in the composite. In some embodiments, the avoidance map consists of a binary black and white image. In other embodiments, the avoidance map additionally includes mid-range grayscale values that signify areas that are occupied by image elements, but which could be partially obscured. In some embodiments, the magnitudes of the grayscale values signify the relative cost of obscuring particular pixels.

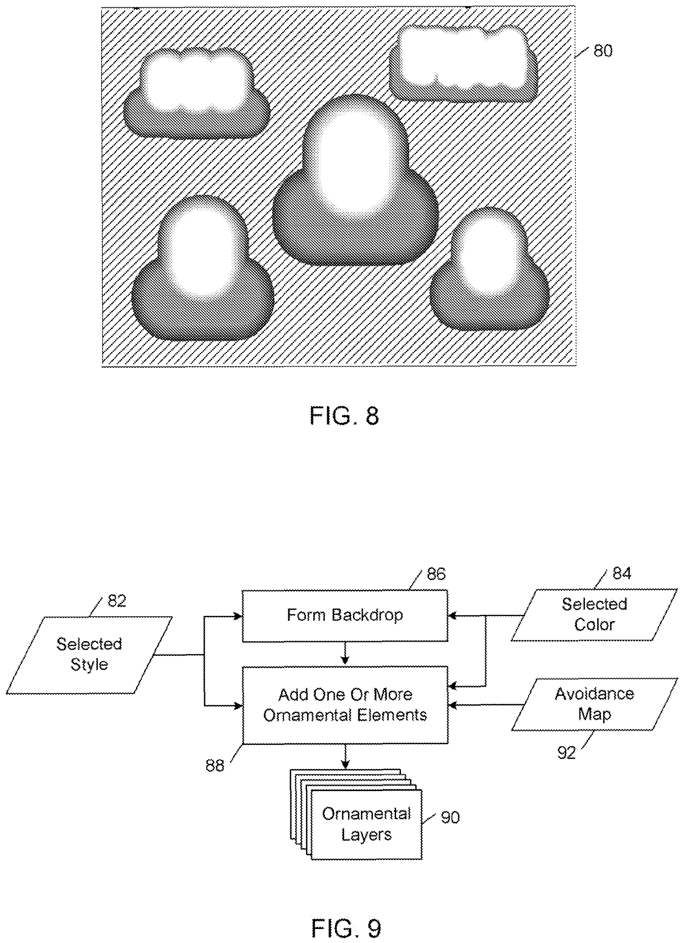

FIG. 8 shows an exemplary embodiment of an avoidance map 80 in which black areas (shown by cross-hatching) correspond to locations that are free of image elements, the white areas correspond to locations that cannot be obscured by any ornamental features, and the gray areas correspond to locations that can be partially obscured by ornamental features where the permissible level of obscuration increases with the darkness of the grayscale values,

FIG. 9 shows an embodiment of a method in accordance with which the background generator 56 places the ornamental elements of the ornamental layers in the locations identified as at least partially free of the image elements in the avoidance map.

The background generator 56 chooses one style from a set of possible styles for the background (FIG. 9, block 82), In some embodiments, the style is selected randomly. In other embodiments, the style may be selected based on a specified user preference, or by a designer's specification in the template.

The background generator 56 chooses a dominant color for the background (FIG. 9, block 84). In some embodiments, the color is selected randomly. In other embodiments the color is selected to match the colors in the image elements.

The background generator 56 forms a backdrop for the background (FIG. 9, block 86). The backdrop is the lowest layer in the z-order and ensures that there are no unfilled areas in the composite. In some embodiments, the backdrop is set to a flat color that is derived from the selected dominant color 84. Alternatively, a backdrop can be defined for each of the available styles 82, which typically consist of one of a set of possible textures that cover the backdrop. Textures may be computed dynamically, or loaded from an image.

The background generator 56 adds a set of ornamental elements to produce a set of ornamental layers 88 (FIG. 9, block 90). The ornamental elements are chosen based on the selected style 82 and are positioned in the ornamental layers 90 based on an avoidance map 92. Examples of ornamental elements are background shapes and detail objects.

The background shapes are selected from a set of available shapes for use with the selected style 82. The number of shapes to be used is different for each background style 82. Each added shape is scaled, rotated and translated to determine the precise appearance in the background. The parameters for scale rotate and translate are determined differently for each style - typically each choice is a weighted random value selected from within some range of possible values defined for the style. Each shape is filled with a colorized texture. The texture is chosen from one of a set of possible textures. The colorization colors are derived from the dominant color. The derived colors may be, for example, lighter or darker shades, harmonizing hues, contrasting hues, etc. Each background shape typically is defined as a separate layer, enabling each shape to potentially be given a cyclic motion definition, as determined by the background style 82. This allows the composite image renderer 14 to cyclically vary parameters of the shape during its appearance on the display 16. Cyclically variable parameters include: position, rotation, intensity, scale. In some embodiments, the background generator 56 renders multiple shapes rendered onto a single image layer or the backdrop layer if there are multiple shapes with a fixed z-order configuration and no independent cyclic motion.

The background detail objects typically include shapes and smaller objects such as lines, curves, text etc. In some implementations, the selected background style 82 defines background details that are to be rendered at a z-order above the image elements. In this case, the background detail objects are positioned so as not to obscure the white areas of the avoidance map. In some implementations, the background style 82 specifies the positioning of background detail objects so as to avoid image elements even when the details are rendered below the image elements in the z-order. In some embodiments, the background generator 56 uses a generate-and-test approach to position the background detail objects based on the avoidance map 92. In this process, the background generator 56 defines a potential detail object by creating the detail object in a temporary image with a known relationship (typically a translation) to the avoidance map 90. The occupied pixels of the detail object are then tested against the avoidance map 90. The proposed shape is rejected if it obscures any white pixel. Depending on the definition of the style and the detail object, the detail object may be accepted if it only obscures grey areas of the avoidance map 90. Like background shapes, each background detail object may be given a cyclic motion, according to the implementation of the selected background style 82. In some cases, it is desirable to prevent multiple detail objects overlapping each other. This can be achieved by rendering the shape of the detail object onto the avoidance map in white. Subsequent use of the avoidance map will then avoid any previously placed background detail objects.

### F. TEMPLATE FILLER

The template filler 50 automatically selects image elements that are suitable for a particular template (layout) specification from a pre-loaded collection of image elements. When the template filler 50 is called upon to instantiate a particular template, it searches the database of image elements for a set of image elements that can satisfy the template constraints. In some embodiments, the template filler 50 retains some memory of prior instantiations with a view to controlling the overall flow of template instantiations (e.g., only choose image elements from a particular time or event for a series of templates, or ensure that the image presented are refreshed).

Each template 22 typically specifies parameters that are required of an image element after the image element already has been scaled and translated to fit in the template. For example, the "radius" parameter in the exemplary template specification provided in the attached Appendix indicates the range of face radii that are acceptable for an image element in the parent region. To find an image element for a region that includes a radius constraint, the template filler 50 scales every image element with a suitable number of faces such that all the faces in the image element meet the radius range specification. If the range in the image element is too great, the required scaling may not be possible in which case that image element is not a suitable candidate for the specified region. Once the scaling has taken place, comparisons may be made with the bounding box parameters and the rotation (ipr) parameters. In some embodiments, the image element is not required to fit exactly within the specified boundary of a region; instead, the image element is centered in the region with a width and height that are the maximum allowable for the image element after scaling has taken place.

After the template filler 50 has assigned a set of image elements to the regions of a template, the template is said to be an "instantiated template," which is a particular arrangement of specific image elements. It is the instantiated template that is scheduled by the scheduler 48 and rendered by the composite image renderer 14 on the display 16. An instantiated template typically is specified by a set of image elements together with their locations (i.e., position of image element centre, rotation angle, and scale factor) in the display area. The locations typically are specified in the coordinate system of the display 16, which typically involves scaling a generic coordinate system to the aspect ratio of the display 16. Although the instantiated template specifies "home" locations for each image element, the actual rendered positions of the image elements varies over time according to the entry and exit behavior ascribed to the layer, and any cyclic motion it is given during the life of the island of stability. As such, it is quite possible for image element layers to overlap for periods of layer motion, though they are generally positioned so as to be all visible.

### G. SCHEDULER AND COMPOSITE IMAGE RENDERER

The scheduler 48 creates a sequence of layers which are rendered by the composite image renderer 14 on the display 16.

As explained above, each image element typically is rendered on its own layer, which has an associated relative z-order location and a motion pattern. Layers have the following characteristics:
a) Layers are the only unit that the composite image renderer 14 can move/scale/rotate/blend independently;
b) Layers exist at a specific z-order location;
c) Layers have a global blend value that can vary with time; and
d) A layer consists of: the entire source image; a mask image which is normally applied to hide the entire source image apart from the part which constitutes the image element; and zero or more variants of the source image. The variants may be generated by transforming the source image using non-photorealistic rendering or other image processing techniques. The source image, the mask image, and any variant images can be combined in many ways over time to reveal/hide the entire image and to blend between original and manipulated versions of the image.

In addition to layers for image elements, there are additional layers for background components. The template specification does not directly affect the background layers, except that an avoidance map is generated from the instantiated template. The avoidance map is used during the background creation process, as described above.

In addition to the normal layers used for an island of stability it is sometimes necessary to introduce temporary layers to create some of the desired transitional effects. A temporary layer is basically a clone of an existing layer with its own entry and exit behavior. The temporary layer allows the scheduler to produce the effect of a particular layer that appears to "move up or down through the z-order" this is impossible with the layer mechanism as described. This effect can be achieved by duplicating the layer at the destination z-order position and gradually fading this in, while at the same time fading out the layer at the old z-order position and then deleting the old layer.

The layers which are passed from the scheduler to the renderer are units of fairly complex behavior that include the following components:
a) Start and end time: This defines the time during which the layer is active - i.e., when it can affect the display.
b) z-order: This is an integer value which determines the order in which layers are applied to the display and hence which layers get overlaid by others.
c) Primary image reference with optional alpha map: This identifies the image displayed in the layer. Images are pre-loaded into texture memory. All images required by a layer and loaded before the layer start time is reached. Images are removed from texture memory when no layer references them.
d) An optional set of one or more supplementary image references with optional alpha map: Each supplementary image is typically a modified version of the primary image which can be blended with the primary image.
e) Global Transparency function over time: This function is typically used to fade the layer in and out
f) Alpha Map application factor function over time: This function determines how the alpha map is applied. When the alpha map application factor is 1.0, the alpha map is fully used to cause pixels whose alpha map value is 0 to be transparent. When the alpha map application factor is 0.0 the alpha map is ignored. Values between 0.0 and 1.0 cause the alpha map to gradually come into effect.
g) Blend function between primary and secondary images over time: This function determines whether the layer shows the primary image, secondary image, or some blend of the two.
h) Base motion function over time: This function determines how the image texture is positioned on the screen. In some embodiments, this specifies 2D translation, scale, and rotation.
i) Cyclic behavior function over time: This function generates cyclic adjustments to the underlying motion, blend and alpha functions.
j) Animated image sequence timing: This mechanism permits an image to be treated as a continuous animation formed from an image sequence. When the layer with animation is being displayed the renderer cycles through the images in the sequence according to the current render time.
k) In the case of a video source image, timing parameters which determine when the video starts to play, relative to the start and end of the layer.

Conventional slideshow transitions change from single image to single image using various effects (e.g., fades and wipes), which are independent of the image content. In contrast, a dynamic image collage generation system is capable of using more sophisticated, content-dependent transitions. For example, transitions may make use of the meta-data in the media database; for example zooming into a particular face from a photo in the current collage, aligning the eyes to a those of a face from a different photo in the new collage, blending from one face to the other, then moving the new face into position in the new collage. Some embodiments implement transitions that depend on the alignment of the eyes in a face in one of the images used in the old island, with the eyes in a face in one of the images used in the new island. In these embodiments, the scheduler 48 builds the transition from multiple aligned layers.

The composite image renderer 14 and the scheduler 48 interact in a complex manner so as to generate and display a smoothly changing, continuously varied display. The scheduler is responsible for operations including the following:
- Selecting an arrangement of images for the next "island of stability".
- Reading and decompressing photos.
- Applying artistic rendering image manipulations.
- Selecting an arrangement of images for the next "island of stability"
- Generating background layers to suit the arrangement of images.
- Loading all image components into texture memory.
Some of these operations are computationally expensive.

The composite image renderer 14 generates a sequence of display frames by rendering each of the active layers in their z-order sequence at that frame time. For each frame, each active layer is evaluated based on the current frame time, to generate a set of image rendering parameters for position, scale, rotation, blend, alpha etc. In some implementations, these can be used by graphics hardware to render the image very efficiently. "Evaluation" in this sense means evaluating each of the temporal functions in the layer, modulating the "base" behavior with any "cyclic" variation. The composite image renderer 14 also is responsible for determining how one island will transition to the next. The composite image renderer 14, however, cannot move from one island to the next until the components for the next island have been constructed and loaded into texture memory, which takes an unpredictable amount of time. Thus, in some embodiments, the layers are rendered for a length of time that cannot be determined when they first appear on the display.

Some embodiments overcome the indeterminate scheduling problem by having the scheduler 48 generate a sequence of layers that are processed completely independently by the composite image renderer 14. However, with this approach, it would not be possible to define island N until the data for island N+1 had been loaded, as it is only at that point that we know when island N+1 can start to display, and hence when island N can be stopped. This approach introduces an unpleasant delay in the system, and would require additional memory. In addition, this approach would still lead to the possibility that even though the data for island N+1 was available, the timing for island N+1 could not be established until the data for island N+2 was loaded. This could prevent island N+1 from being started at the time that island N was scheduled to end.

Other embodiments overcome the indeterminate scheduling problem by allowing the end times of layers to be modified while they are actively being rendered. In particular, to allow the layer end time to be initially set as infinite (or a very long time in the future) so that the island N rendering can be started as soon as its data has been loaded. When the scheduler has loaded all the data necessary for island N+1 it can then modify the end times of the layers in island N, create any transition layers necessary to blend between island N and island N+1 and create the layers for island N+1 with infinite end times. The process can then cycle from island to island. The scheduling therefore becomes a process of scheduling transitions from the current island to the next island.

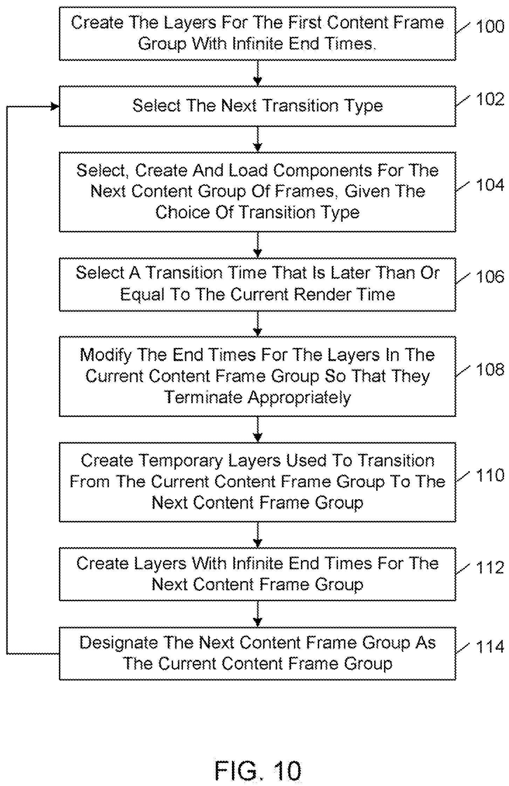

FIG. 10 shows an embodiment in accordance with the scheduling process described in the preceding paragraph:
1. Create the layers for the first island, with infinite end times (FIG. 10, block 100).
2. Select the next transition type (FIG. 10, block 102).
3. Select, create, and load appropriate components for the next island, given the choice of transition type (FIG. 10, block 104).
4. Select a transition time that is later than or equal to the current render time (FIG. 10, block 106).
5. Modify the end times for the layers in the current island so that they terminate appropriately (FIG. 10, block 108). Note that this may also involve adjustment of fade out times, which are related to the layer end times.
6. Create temporary layers required to effect the transition from the current island (or content frame group) to the new island (content frame group) (FIG. 10, block 110).
7. Create layers with infinite end times for the new island (content frame group) (FIG. 10, block 112).
8. Loop to 2 treating the "new" island as the new "current" island (FIG. 10, block 114).

In some embodiments, the process of FIG. 10 is modified by replacing step 4 with step 4A:
4A. Inform each relevant layer in the current island that it should cease to cycle at the end of the current cycle. The layer responds with the time when it will be at the end of its cycle. The scheduler can then ensure that the selected transition time is later than the latest end of cycle time of the relevant layers.
In accordance with this modification, some layers are required to be at a known position and display state in order to ensure smooth transitions, given that the current island layers will be at some arbitrary point in their cyclic behavior.

The process of FIG. 10 can be extended in numerous ways. For example, the capabilities of the layer can be extended or reduced to suit particular applications. The layer concept could readily be extended to 3D objects for example. Another extension would be to use the layer interface as an efficient interface between different devices, one responsible for scheduling and the other responsible for rendering,

### III. EXEMPLARY OPERATING ENVIRONMENT

Embodiments of the dynamic collage generation system 10 may be implemented by one or more discrete modules (or data processing components) that are not limited to any particular hardware, firmware, or software configuration. In the illustrated embodiments, the modules may be implemented in any computing or data processing environment, including in digital electronic circuitry (e.g., an application-specific integrated circuit, such as a digital signal processor (DSP)) or in computer hardware, firmware, device driver, or software. In some embodiments, the functionalities of the modules are combined into a single data processing component. In some embodiments, the respective functionalities of each of one or more of the modules are performed by a respective set of multiple data processing components.

The collage layer generator 12, the composite image renderer 14, and the display 16 may be co-located on a single apparatus or they may be distributed across multiple apparatus; if distributed across multiple apparatus, the collage layer generator 12, the composite image renderer 14, and the display 16 may communicate with each other over local wired or wireless connections, or they may communicate over global network connections (e.g., communications over the internet).

In some implementations, process instructions (e.g., machine-readable code, such as computer software) for implementing the methods that are executed by the embodiments of the dynamic collage generation system 10, as well as the data it generates, are stored in one or more machine-readable media. Storage devices suitable for tangibly embodying these instructions and data include all forms of non-volatile computer-readable memory, including, for example, semiconductor memory devices, such as EPROM, EEPROM, and flash memory devices, magnetic disks such as internal hard disks and removable hard disks, magneto-optical disks, DVD-ROM/RAM, and CD-ROM/RAM.

In general, embodiments of the dynamic collage generation system 10 may be implemented in any one of a wide variety of electronic devices, including desktop computers, workstation computers, and server computers.

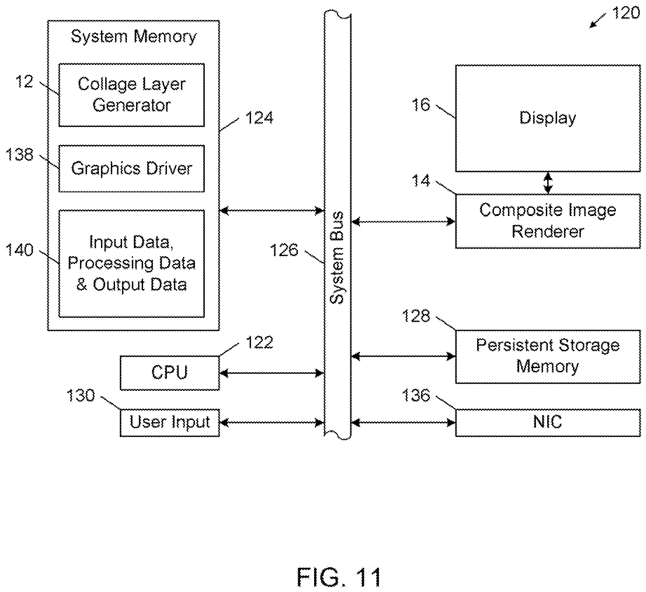

FIG. 11 shows an embodiment of a computer system 120 that can implement any of the embodiments of the dynamic collage generation system 10 that are described herein. The computer system 120 includes a processing unit 122 (CPU), a system memory 124, and a system bus 126 that couples processing unit 122 to the various components of the computer system 120. The processing unit 122 typically includes one or more processors, each of which may be in the form of any one of various commercially available processors. The system memory 124 typically includes a read only memory (ROM) that stores a basic input/output system (BIOS) that contains start-up routines for the computer system 120 and a random access memory (RAM). The system bus 126 may be a memory bus, a peripheral bus or a local bus, and may be compatible with any of a variety of bus protocols, including PCI, VESA, Microchannel, ISA, and EISA. The computer system 120 also includes a persistent storage memory 128 (e.g., a hard drive, a floppy drive, a CD ROM drive, magnetic tape drives, flash memory devices, and digital video disks) that is connected to the system bus 126 and contains one or more computer-readable media disks that provide non-volatile or persistent storage for data, data structures and computer-executable instructions.

A user may interact (e.g., enter commands or data) with the computer 120 using one or more input devices 130 (e.g., a keyboard, a computer mouse, a microphone, joystick, and touch pad). In some embodiments, the input devices 130 include a video camera directed at the audience as described in U.S. Application No. __, filed on even date herewith, and entitled "SYSTEM AND METHOD FOR DYNAMIC GENERATION OF MULTIMEDIA CONTENT" [Attorney Docket No. 200802868-1]. Information may be presented through a graphical user interface (GUI) that is displayed to the user on the display 16 (implemented by, e.g., a display monitor), which is controlled by the composite image renderer 14 (implemented by, e.g., a video graphics card). The computer system 120 also typically includes peripheral output devices, such as speakers and a printer. One or more remote computers may be connected to the computer system 120 through a network interface card (NIC) 136.

As shown in FIG. 8, the system memory 124 also stores the collage layer generator 12, a graphics driver 138, and processing information 140 that includes input data, processing data, and output data. In some embodiments, the collage layer generator 12 interfaces with the graphics driver 138 (e.g., via a DirectX® component of a Microsoft Windows® operating system) to present a dynamic image collage on the display monitor 16. Some embodiments additionally include an interface component resident in the system memory 12 that interfaces with the graphics driver 138 and the user input 130 to present a user interface on the display 16 for managing and controlling the operation of the dynamic collage generation system 10.

### IV. CONCLUSION

The embodiments that are described herein are operable to automatically generate a dynamic collage of images (e.g., image elements, such as digital photographs and salient elements extracted therefrom). The collage can be configured to change continuously over time so as to produce a visually appealing ambient experience that is likely to sustain a viewer's interest over long time periods. These embodiments typically have imperfect knowledge of what the user is likely to find interesting. However, by extracting multiple objects of interest from user photos and displaying them together, these embodiments typically are able to provide the user with a rich choice of visual target such that the user is more likely to see at least one thing of interest in the dynamic collage. In some cases, a dynamic collage can leverage the large number of possible variations in the presentation of visual content to reduce the likelihood that the same composition will be presented more than once, thereby ensuring that the presentation of the viewer's image collection always has a refreshing appeal.

Other embodiments are within the scope of the claims.

## Claims

1. A computer implemented method, comprising:
determining a sequence of templates (22), **characterised in that** each of the templates (22) defines a respective spatiotemporal layout of regions in a display area (38), wherein each of the regions is associated with a respective set of one or more image selection criteria and respective set of one or more temporal behavior attribute values for the image elements assigned to the region;
for each of the templates (22), ascertaining a respective image layer (18) for each of the regions of the template, wherein the ascertaining comprises for each of the layers assigning a respective image element (30) to the respective region in accordance with the respective set of image selection criteria;
for each frame (20) in a sequence of frames composited from one or more layers, producing a respective set of rendering parameter values that specifies a composition of the frame in the display area (38) based on a respective set of ones of the image layers (18) determined for one or more of the templates (22) and the respective sets of temporal behavior attribute values for the image elements assigned to the region; and
outputting the sets of rendering parameter values to a composite image renderer (14) for generating a dynamic image collage consisting of a sequence of groups of frames.

2. The method of claim 1, wherein the producing comprises for each of the templates (22) generating a respective content group of the frames (20), wherein the generating comprises for each of the templates combining ones of the image layers (18) determined for the template and the respective set of temporal behavior attribute values into respective ones of the frames of the respective content group.

3. The method of claim 2, wherein:
the determining comprises receiving one or more transition plans each of which defines a respective transition between one or more pairs of successive ones of the templates (22) in the sequence; and
the producing comprises for each pair of the templates (22) combining ones of the image layers (18) determined for the templates of the pair in accordance with the respective transition plan to produce a respective transition group of the frames between successive ones of the content groups of frames.

4. The method of claim 1, further comprising for each of the templates (22) generating a respective set of ornamental layers (90) each comprising a respective ornamental element, wherein the producing comprises for each of the frames (20) combining the respective set of image layers (18) with the respective set of ornamental layers to produce a respective one of the content frames.

5. The method of claim 4, wherein the generating comprises for each of the templates (22) determining a respective avoidance map (92) identifying respective unobscurable portions of the display area (38) that contain image element content that is unobscurable by the ornamental elements, and positioning ones of the ornamental elements in ornamental layers (90) such that the unobscurable portions of the display area of the content frames are free of contents of the ornamental elements.

6. The method of claim 5, wherein each of one or more of the respective avoidance maps (92) additionally identifies respective obscurable portions of the display area (38) that contain image element content that is at least in part obscurable by contents of the ornamental elements.

7. The method of claim 4, wherein at least one of the ornamental layers (90) is associated with a respective set of one or more ornamental temporal behaviour attribute values, and the producing comprises for each of the one or more ornamental layers (90) determining a respective layout of the respective ornamental element in the display area based on the respective set of ornamental temporal behavior attribute values.

8. The method of claim 4, wherein for each of the frames (20) the combining comprises interspersing ones of the ornamental layers (90) in the z-order of the respective set of image layers (18).

9. The method of claim 1, wherein at least one of the temporal behaviour attribute values specifies a cyclic inter-frame motion of the respective region in the display area (38).

10. The method of claim 1, wherein the producing comprises:
for each of the frames (20) determining a respective combination of ones of the respective image layers (18) based on a respective frame time; and
for each of the respective image layers (18), producing respective ones of the rendering parameter values that define the respective combination of the image layers in the display area (38).

11. The method of claim 10, wherein the producing comprises specifying a respective end time of the layers (18) in a respective group of the frames; and
further comprising loading data needed to render the group of frames into a computer-readable memory (124, 128) while a preceding group of the frames is being rendered by the composite image renderer (14), determining a completion time for the loading, and modifying the respective end time of the layers in the respective group of frames based on the completion time.

12. The method of claim 1, further comprising for each of one or more of the image elements (30) demarcating the image element in a respective digital image, wherein the demarcating comprises determining a respective mask that demarcates the image element in the respective digital image.

13. The method of claim 12, further comprising for each of the demarcated image elements generating one or more non-photorealistic variants of the respective digital image, and wherein the producing comprises creating a transition across ones of the frames (20), the creating comprising for at least one of the demarcated image elements blending different contributions of the respective digital image and its non-photorealistic variants to produce different respective representations of the image element (30) in respective ones of the frames of the transition.

14. The method of claim 1, wherein at least one of the templates (22) comprises image selection criteria that specifies a required relationship between metadata of image elements assignable to respective ones of the regions, and the assigning of respective image elements (30) to regions of the at least one template is performed in accordance with the specified required relationship.

15. The method of claim 14, wherein at least one of the templates (22) comprises image selection criteria that specifies the required relationship in terms of metadata indicating individual persons associated with the image elements (30).

## Patentansprüche

1. Computer-implementiertes Verfahren, das Folgendes umfasst:
Bestimmen einer Sequenz von Vorlagen (22), **dadurch gekennzeichnet, dass** jede der Vorlagen (22) eine jeweilige räumlich-zeitliche Anordnung von Bereichen in einer Anzeigefläche (38) definiert, wobei jeder der Bereiche mit einem jeweiligen Satz von einem oder mehreren Bildauswahlkriterien und einem jeweiligen Satz von einem oder mehreren zeitlichen Verhaltensattributwerten für die dem Bereich zugeordneten Bildelemente verbunden ist;
für jede der Vorlagen (22), Ermitteln einer jeweiligen Bildebene (18) für jeden der Bereiche der Vorlage, wobei das Ermitteln für jede der Ebenen das Zuordnen eines jeweiligen Bildelements (30) zu dem jeweiligen Bereich gemäß dem jeweiligen Satz von Bildauswahlkriterien umfasst;
für jedes Einzelbild (20) in einer Sequenz von Einzelbildern, die aus einer oder mehreren Ebenen zusammengesetzt sind, Herstellen eines jeweiligen Satzes von Renderingparameterwerten, der eine Zusammensetzung des Einzelbildes in der Anzeigefläche (38) spezifiziert, basierend auf einem jeweiligen Satz von einer der Bildebenen (18), die für eine oder mehrere der Schablonen (22) bestimmt sind, und den jeweiligen Sätzen von zeitlichen Verhaltensattributwerten für die dem Bereich zugeordneten Bildelemente; und
Ausgeben der Sätze von Renderingparameterwerten an einen Renderer (14) für zusammengesetzte Bilder für die Erzeugung einer dynamischen Bildcollage, die aus einer Gruppensequenz von Einzelbildern besteht.

2. Verfahren nach Anspruch 1, wobei das Herstellen für jede der Vorlagen (22) ein Erzeugen einer jeweiligen Inhaltsgruppe der Einzelbilder (20) umfasst, wobei das Erzeugen für jede der Vorlagen das Kombinieren von für die Vorlage bestimmten Bildebenen (18) und des jeweiligen Satzes von zeitlichen Verhaltensattributwerten in jeweilige der Einzelbilder der jeweiligen Inhaltsgruppe umfasst.

3. Verfahren nach Anspruch 2, wobei:
das Bestimmen ein Empfangen eines oder mehrerer Übergangspläne umfasst, von denen jeder einen jeweiligen Übergang zwischen einem oder mehreren Paaren von aufeinander folgenden der Vorlagen (22) in der Sequenz definiert; und
das Herstellen für jedes Paar der Vorlagen (22) ein Kombinieren von für die Vorlagen des Paares bestimmten Bildebenen (18) gemäß dem jeweiligen Übergangsplan umfasst, um eine jeweilige Übergangsgruppe der Einzelbilder zwischen aufeinanderfolgenden Inhaltsgruppen von Einzelbildern zu erzeugen.

4. Verfahren nach Anspruch 1, das ferner für jede der Vorlagen (22) das Erzeugen eines jeweiligen Satzes von Zierebenen (90) umfasst, die jeweils ein jeweiliges Zierelement umfassen, wobei das Herstellen für jedes der Einzelbilder (20) das Kombinieren des jeweiligen Satzes von Bildebenen (18) mit dem jeweiligen Satz von Zierebenen umfasst, um einen jeweiligen der Inhaltseinzelbilder zu erzeugen.

5. Verfahren nach Anspruch 4, wobei das Erzeugen für jede der Vorlagen (22) das Bestimmen einer jeweiligen Vermeidungszuordnung (92) umfasst, die jeweilige unverdeckbare Abschnitte der Anzeigefläche (38) identifiziert, die Bildelementinhalte enthalten, die durch die Zierelemente nicht verdeckbar sind, und das Anordnen von Zierelementen in Zierebenen (90) derart, dass die unverdeckbaren Abschnitte der Anzeigefläche der Inhaltseinzelbilder frei von Inhalten der Zierelemente sind.

6. Verfahren nach Anspruch 5, wobei jede von einer oder mehreren der jeweiligen Vermeidungszuordnungen (92) zusätzlich jeweilige verdeckbare Abschnitte der Anzeigefläche (38) identifiziert, die Bildelementinhalte enthalten, die wenigstens teilweise durch Inhalte der Zierelemente verdeckbar sind.

7. Verfahren nach Anspruch 4, wobei wenigstens eine der Zierebenen (90) mit einem jeweiligen Satz von einem oder mehreren zeitlichen Zierverhaltenattributwerten verbunden ist und das Herstellen für jede der einen oder mehreren Zierebenen (90) das Bestimmen einer jeweiligen Anordnung des jeweiligen Zierelements in der Anzeigefläche basierend auf dem jeweiligen Satz von zeitlichen Zierverhaltenattributwerten umfasst.

8. Verfahren nach Anspruch 4, wobei für jedes der Einzelbilder (20) das Kombinieren das Einstreuen von Zierebenen (90) in der z-Ordnung des jeweiligen Satzes von Bildebenen (18) umfasst.

9. Verfahren nach Anspruch 1, wobei wenigstens einer der zeitlichen Verhaltensattributwerte eine zyklische Zwischeneinzelbildbewegung des jeweiligen Bereichs in der Anzeigefläche (38) spezifiziert.

10. Verfahren nach Anspruch 1, wobei das Herstellen Folgendes umfasst:
für jedes der Einzelbilder (20) Bestimmen einer jeweiligen Kombination von jeweiligen Bildebenen (18) basierend auf einer jeweiligen Einzelbildzeit; und
für jede der jeweiligen Bildebenen (18), Herstellen von jeweiligen Renderingparameterwerten, die die jeweilige Kombination der Bildebenen in der Anzeigefläche (38) definieren.

11. Verfahren nach Anspruch 10, wobei das Herstellen das Spezifizieren einer jeweiligen Endzeit der Ebenen (18) in einer jeweiligen Gruppe der Einzelbilder umfasst; und
ferner das Laden von Daten, die zum Rendern der Gruppe von Einzelbildern benötigt werden, in einen computerlesbaren Speicher (124, 128), während eine vorhergehende Gruppe der Einzelbilder durch den Renderer (14) für zusammengesetzte Bilder gerendert wird, das Bestimmen einer Beendigungszeit für das Laden und das Modifizieren der jeweiligen Endzeit der Ebenen in der jeweiligen Gruppe von Einzelbildern basierend auf der Beendigungszeit umfasst.

12. Verfahren nach Anspruch 1, das ferner für jedes von einem oder mehreren der Bildelemente (30) ein Abgrenzen des Bildelements in einem jeweiligen digitalen Bild umfasst, wobei das Abgrenzen das Bestimmen einer jeweiligen Maske umfasst, die das Bildelement in dem jeweiligen digitalen Bild abgrenzt.

13. Verfahren nach Anspruch 12, das ferner für jedes der abgegrenzten Bildelemente das Erzeugen einer oder mehrerer nicht fotorealistischer Varianten des jeweiligen digitalen Bildes umfasst, und wobei das Herstellen das Erstellen eines Übergangs über Einzelbilder (20) umfasst, wobei das Erstellen für wenigstens eines der abgegrenzten Bildelemente das Verschmelzen verschiedener Beiträge des jeweiligen digitalen Bildes und seiner nicht fotorealistischen Varianten umfasst, um verschiedene jeweilige Darstellungen des Bildelements (30) in jeweiligen der Einzelbilder des Übergangs zu erzeugen.

14. Verfahren nach Anspruch 1, wobei wenigstens eine der Vorlagen (22) Bildauswahlkriterien umfasst, die eine erforderliche Beziehung zwischen Metadaten von Bildelementen spezifizieren, die jeweiligen Bereichen zugeordnet werden können, und das Zuordnen jeweiliger Bildelemente (30) zu Bereichen der wenigstens einen Vorlage entsprechend der spezifizierten erforderlichen Beziehung ausgeführt wird.

15. Verfahren nach Anspruch 14, wobei wenigstens eine der Vorlagen (22) Bildauswahlkriterien umfasst, die die erforderliche Beziehung in Form von Metadaten spezifizieren, die einzelne Personen angeben, die den Bildelementen (30) zugehörig sind.

## Revendications

1. Procédé mis en œuvre par ordinateur, comprenant :
la détermination d'une séquence de modèles (22), **caractérisé en ce que** chacun des modèles (22) définit une disposition spatio-temporelle respective de régions dans une zone d'affichage (38), chacune des régions étant associée à un ensemble respectif d'un ou plusieurs critères de sélection d'image et à un ensemble respectif d'une ou plusieurs valeurs d'attribut de comportement temporel pour les éléments d'image attribués à la région ;
pour chacun des modèles (22), la vérification d'une couche d'image respective (18) pour chacune des régions du modèle, la vérification comprenant pour chacune des couches l'attribution d'un élément d'image respectif (30) à la région respective conformément à l'ensemble respectif de critères de sélection d'image ;
pour chaque image (20) dans une séquence d'images composées d'une ou plusieurs couches, la production d'un ensemble respectif de valeurs de paramètres de rendu qui spécifie une composition de l'image dans la zone d'affichage (38) sur la base d'un ensemble respectif des couches d'image (18) déterminées pour un ou plusieurs des modèles (22) et les ensembles respectifs de valeurs d'attributs de comportement temporel pour les éléments d'image attribués à la région ; et
la transmission des ensembles de valeurs de paramètres de rendu à un moteur de rendu d'image composite (14) pour générer un montage d'image dynamique consistant en une séquence de groupes d'images.

2. Procédé selon la revendication 1, la production comprenant pour chacun des modèles (22) la génération d'un groupe de contenu respectif des images (20), la génération comprenant, pour chacun des modèles, la combinaison de couches d'image (18) déterminées pour le modèle et l'ensemble respectif de valeurs d'attribut de comportement temporel dans des images respectives du groupe de contenu respectif.

3. Procédé selon la revendication 2 :
la détermination comprenant la réception d'un ou plusieurs plans de transition dont chacun définit une transition respective entre une ou plusieurs paires de modèles successifs des modèles (22) dans la séquence ; et
la production comprenant, pour chaque paire de modèles (22), la combinaison de certaines des couches d'image (18) déterminées pour les modèles de la paire conformément au plan de transition respectif afin de produire un groupe de transition respectif des images entre des images successives des groupes de contenu des images.

4. Procédé selon la revendication 1, comprenant en outre, pour chacun des modèles (22), la génération d'un ensemble respectif de couches ornementales (90) comprenant chacune un élément ornemental respectif, la production comprenant, pour chacune des images (20), la combinaison de l'ensemble respectif de couches d'image (18) et de l'ensemble respectif de couches ornementales pour produire une image respective des images de contenu.

5. Procédé selon la revendication 4, la génération comprenant, pour chacun des modèles (22), la détermination d'une carte d'évitement (92) respective identifiant des parties respectives non masquables de la zone d'affichage (38) qui contiennent un contenu d'élément d'image qui n'est pas masquable par les éléments ornementaux et le positionnement de certains des éléments ornementaux dans des couches ornementales (90) de telle sorte que les parties non masquables de la zone d'affichage des images de contenu sont exemptes de contenu des éléments ornementaux.

6. Procédé selon la revendication 5, chacune d'une ou plusieurs des cartes d'évitement (92) respectives identifiant en outre des parties masquables respectives de la zone d'affichage (38) qui contiennent un contenu d'élément d'image qui est au moins en partie masquable par le contenu des éléments ornementaux.

7. Procédé selon la revendication 4, au moins une des couches ornementales (90) étant associée à un ensemble respectif d'une ou plusieurs valeurs d'attribut de comportement temporel ornemental, et la production comprenant pour chacune de la ou des couches ornementales (90) la détermination d'une disposition respective de l'élément ornemental respectif dans la zone d'affichage sur la base de l'ensemble respectif de valeurs d'attribut de comportement temporel ornemental.

8. Procédé selon la revendication 4, pour chacune des images (20), la combinaison comprenant des couches intercalées des couches ornementales (90) dans l'ordre de plan de l'ensemble respectif de couches d'image (18).

9. Procédé selon la revendication 1, au moins une des valeurs d'attribut de comportement temporel spécifiant un mouvement cyclique entre les images de la région respective dans la zone d'affichage (38).

10. Procédé selon la revendication 1, la production comprenant :
pour chacune des images (20), la détermination d'une combinaison respective de certaines des couches d'images (18) respectives sur la base d'une durée d'image respective ; et
pour chacune des couches d'image (18) respectives, la production de valeurs respectives des valeurs de paramètres de rendu qui définissent la combinaison respective des couches d'image dans la zone d'affichage (38).

11. Procédé selon la revendication 10, la production comprenant la spécification d'une heure de fin respective des couches (18) dans un groupe respectif des images ; et
comprenant en outre le chargement des données nécessaires pour rendre le groupe d'images dans une mémoire lisible par ordinateur (124, 128) tandis qu'un groupe précédent des images est rendu par le moteur de rendu d'image composite (14), la détermination d'un temps d'exécution pour le chargement, et la modification de l'heure de fin respective des couches dans le groupe respectif d'images en fonction du temps d'exécution.

12. Procédé selon la revendication 1, comprenant en outre pour chacun d'un ou plusieurs des éléments d'image (30) la démarcation de l'élément d'image dans une image numérique respective, la démarcation comprenant la détermination d'un masque respectif qui démarque l'élément d'image dans l'image numérique respective.

13. Procédé selon la revendication 12, comprenant en outre pour chacun des éléments d'image démarqués la génération d'une ou plusieurs variantes non photoréalistes de l'image numérique respective, et la production comprenant la création d'une transition à travers certaines des images (20), la création comprenant pour au moins l'un des éléments d'image démarqués le mélange de différentes contributions de l'image numérique respective et de ses variantes non photoréalistes pour produire différentes représentations respectives de l'élément d'image (30) dans des images respectives des images de la transition.

14. Procédé selon la revendication 1, au moins l'un des modèles (22) comprenant des critères de sélection d'image qui spécifient une relation requise entre des métadonnées d'éléments d'image attribuables à des régions respectives des régions, et l'attribution d'éléments d'image (30) respectifs aux régions de l'au moins un modèle étant effectuée conformément à la relation requise spécifiée.

15. Procédé selon la revendication 14, au moins l'un des modèles (22) comprenant des critères de sélection d'image qui spécifient la relation requise en termes de métadonnées indiquant des personnes individuelles associées aux éléments d'image (30).
